# EUROPÄISCHE PATENTSCHRIFT

(11) **EP 1 272 307 B1**
(45) Veröffentlichungstag und Bekanntmachung des Hinweises auf die Patenterteilung: **04.08.2004**
(21) Anmeldenummer: 01929297.8
(22) Anmeldetag: 03.04.2001
(51) Int. Cl.: B23K 9/20

(54) **BOLZENSCHWEISSVORRICHTUNG, INSBESONDERE FÜR DAS BOLZENSCHWEISSEN OHNE STÜTZFUSS**
STUD WELDING DEVICE, ESPECIALLY FOR STUD WELDING WITHOUT A SUPPORT BASE
DISPOSITIF DE SOUDAGE DE GOUJONS, NOTAMMENT DESTINE AU SOUDAGE DE GOUJON SANS PIED D'APPUI

(30) Priorität: 12.04.2000 DE 10018239; 20.07.2000 DE 10035371
(43) Veröffentlichungstag der Anmeldung: 08.01.2003
(73) Patentinhaber: Nelson Bolzenschweiss-Technik GmbH & Co. KG, 58285 Gevelsberg (DE)
(72) Erfinder: BUDDE, Karl-Friedrich, 58285 Gevelsberg (DE); MADSAK, Jürgen, 58339 Breckerfeld (DE)
(74) Vertreter: Eder, Christian, Dipl.-Ing.
(86) Internationale Anmeldenummer: PCT/DE2001/001253
(87) Internationale Veröffentlichungsnummer: WO 2001/076800

(56) Entgegenhaltungen:
- DE-A- 4 403 541
- GB-A- 2 118 878

## Beschreibung

Die Erfindung betrifft ein Verfahren und eine Vorrichtung für das Bolzenschweißen, insbesondere für das Bolzenschweißen ohne Stützfuß.

Bei bisher überwiegend verwendeten Bolzenschweißgeräten wird ein Schweißkopf bzw. für manuelles Schweißen eine Schweißpistole eingesetzt, wobei jeweils am vorderen Ende des Schweißkopfs bzw. der Schweißpistole ein Stützfuß oder Abstandshalter vorgesehen ist. Nach dem Aufsetzen des Bolzenschweißkopfs bzw. der Schweißpistole mit dem Stützfuß auf die Werkstückoberfläche ergibt sich somit eine definierte Position, insbesondere ein definierter Abstand des Schweißkopfs bzw. der Schweißpistole von der Werkstückoberfläche. Die Bewegung des Bolzenhalters und des darin gehaltenen und zu verschweißenden Teils in Bezug auf die Werkstückoberfläche kann dann ausgehend von dieser definierten Position vorgenommen werden.

Eine derartige Bolzenschweißvorrichtung ist beispielsweise in der DE 32 15 453 C1 beschrieben. Bei dieser Bolzenschweißvorrichtung weist die Bolzenschweißpistole einen elektromotorischen Antrieb für die Schweißachse auf, wobei ein Gleichstrommotor die Schweißachse (hier die Pinole) und den damit verbundenen Bolzenhalter in axialer Richtung antreibt. Nach dem Aufsetzen der Schweißpistole mit dem Stützfuß auf die Werkstückoberfläche wird der Bolzenhalter zunächst solange auf die Werkstückoberfläche zubewegt, bis die Stirnseite des im Bolzenhalter gehaltenen zu verschweißenden Teils in Kontakt mit der Werkstückoberfläche steht. Anschließend wird der Strom für den Vorstromlichtbogen eingeschaltet und die Schweißachse mittels des Gleichstrommotors von der Werkstückoberfläche abgehoben. Hierdurch wird ein Vorstromlichtbogen gezündet. Der weitere Verlauf entspricht dem üblichen Verfahren des Bolzenschweißens mit Hubzündung.

Des Weiteren ist aus der EP 0 776 261 B1 eine Vorrichtung zum Zusammenschweißen wenigstens zweier Teile bekannt, bei der ein Schweißkopf mittels eines Verstellantriebs, beispielsweise eines Roboterarms, gegenüber der beabsichtigten Schweißstelle des Werkstücks ausgerichtet und anschließend in Richtung auf das Werkstück bewegt wird, bis die Stirnseite des zu verschweißenden Teils an die Werkstückoberfläche angepresst ist. Der Schweißkopf wird dabei über die Position einer erstmaligen Berührung des zu verschweißenden Teils mit der Werkstückoberfläche hinaus in Richtung auf das Werkstück zubewegt. Die Schweißachse des Schweißkopfs ist hierzu derart ausgebildet, dass sie bei dieser weiteren Bewegung des Schweißkopfs in Richtung auf das Werkstück in den Schweißkopf hineinbewegt wird.

Durch das Vorsehen eines derartigen zusätzlichen Bewegungswegs für den Schweißkopf ist es möglich, in einem großen Bereich unabhängig von Lagetoleranzen des Werkstücks und Toleranzen bei der Bewegung des Schweißkopfs einen sicheren Kontakt zwischen der Stirnseite des zu verschweißenden Teils und dem Werkstück herzustellen. Nach dem Stoppen der Bewegung des Schweißkopfs kann die Schweißachse des Schweißkopfs mit dem Bolzenhalter und dem darin gehaltenen zu verschweißenden Teil ausgehend von der dann vorhandenen Ausgangsstellung zur weiteren Durchführung des Schweißvorgangs bewegt werden. Diese Bewegung erfolgt mittels des Antriebs für die Schweißachse. Diese Vorrichtung bzw. dieses Verfahren ermöglicht somit ein Schweißen ohne Stützfuß.

Der Vorteil des Schweißens ohne Stützfuß ist u.a. darin zu sehen, dass der Schweißbereich, d.h. der Bereich der Werkstückoberfläche, der für das Schweißen zugänglich sein muss, im Vergleich zum Schweißen mit Stützfuß eine deutlich geringere Fläche aufweisen kann. Insbesondere ist es beim Schweißen mit Stützfuß kaum möglich, ein zu verschweißendes Teil in relativ engen Nuten des Werkstücks mit diesem zu verschweißen.

Insbesondere bei Bolzenschweißverfahren bzw. Bolzenschweißvorrichtungen, die ohne Stützfuß arbeiten, besteht jedoch eine gewisse Gefahr darin, dass bei einem Fehlen eines zu verschweißenden Teils im Bolzenhalter der Bolzenhalter selbst mit dem Werkstück verschweißt wird.

Bei Bolzenschweißvorrichtungen, die mit einem Stützfuß arbeiten, könnte das Detektieren des Vorhandensein eines zu verschweißenden Teils im Bolzenhalter auf einfache Weise dadurch erfolgen, dass nach dem Aufsetzen des Schweißkopfs auf das Werkstück der Weg gemessen wurde, um den die Schweißachse auf das Werkstück zubewegt werden muss, bis ein Kontakt erreicht ist. In Kenntnis der Geometrie des zu verschweißenden Teils und dessen Position im Bolzenhalter kann dann auf das Vorhandensein eines zu verschweißenden Teils geschlossen werden, wenn die zurückgelegte Wegstrecke der Schweißachse bis zum Kontakt des zu verschweißenden Teils mit dem Werkstück kleiner ist als ein vorgegebener Weg. Dieses Verfahren versagt jedoch bei Bolzenschweißvorrichtungen, die ohne Stützfuß arbeiten.

Aus der DE-A-44 03 541 ist eine Bolzenschweißvorrichtung bekannt, wobei in der Ladevorrichtung ein sensor vorgesehen ist, welcher das Vorhandensein eines Bolzens in der Zufuhrposition detektiert.

Der Erfindung liegt daher die Aufgabe zugrunde, einen Bolzenhalter, ein Bolzenschweißverfahren und eine Bolzenschweißvorrichtung, insbesondere für das Bolzenschweißen ohne Stützfuß zu schaffen, wobei das Vorhandensein eines zu verschweißenden Teils im Bolzenhalter sicher detektierbar ist.

Die Erfindung löst diese Aufgabe mit den Merkmalen der Patentansprüche 1 bzw. 7 und 8.

Durch die Ausbildung eines Bolzenhalter mit einer Sensoreinrichtung ist es auf einfache Art und Weise möglich, das Vorhandensein eines Bolzens im Bolzenhalter zu detektieren und den Schweißvorgang, wie beispielsweise Einschalten des Schweißstroms, in Abhängigkeit hiervon zu steuern.

Die Sensoreinrichtung kann hierzu im Bolzenhalter fest integriert und kostengünstig in einem Herstellungsprozess zusammen mit dem Bolzenhalter gefertigt werden. Hierbei können derartige Bolzenhalter mittels geeigneter Befestigungsmittel, wie beispielsweise Bajonettverschluss, Überwurfmutter, o.ä. am Kopf einer Schweißvorrichtung, beispielsweise einer Schweißachse, lösbar angeordnet sein. Hierdurch kann ein derartiger Bolzenhalter schnell für die Verarbeitung anderer zu verschweißender Teile gewechselt und zu Reparaturzwecken ausgetauscht werden. Es ist auch denkbar, vorhandene Schweißvorrichtungen ohne Sensoreinrichtung mit derartigen lösbaren Bolzenhaltern nachzurüsten.

Zur Verwirklichung dieser Vorteile kann die Sensoreinrichtung aber auch am Bolzenhalter selbst, beispielsweise an seiner Innen- oder Außenseite, oder an der Überwurmutter, insbesondere auf dort angeformten Lamellen, lösbar und fixierbar angeordnet sein. Hierdurch ergibt sich der weitere Vorteil, dass auch nicht lösbare Bolzenhalter nachgerüstet werden können, wobei die Sensoreinrichtung selbst hierbei für andere Arbeitsgänge wechselbar oder zu Reparaturzwecken austauschbar ist.

In einer bevorzugten Ausführungsform der Erfindung ist die Sensoreinrichtung als wenigstens ein Dehnungsmessstreifen ausgebildet, welche vorteilhafterweise eine sehr kostengünstige Realisierung eines Sensors darstellt. Selbstverständlich sind auch andere Ausführungsformen, wie beispielsweise Piezoelemente, o.ä. einer Sensoreinrichtung denkbar, die geeignet sind, Verformungen am Bolzenhalter zu detektieren.

Mittels einer solchen Sensoreinrichtung ist es beispielsweise mittels einer einfachen Schwellwertschaltung möglich festzustellen, ob sich vor einem Schweißvorgang ein zu verschweißendes Teil, insbesondere Kragenbolzen, in dem Bolzenhalter befindet. Ein Schweißvorgang ohne Bolzen und ein mögliches unerwünschtes Verschweißen des Bolzenhalters an einem Werkstück kann hierdurch auf einfache Weise verhindert werden.

Weiterhin ist es möglich, die Sensoreinrichtung mit einer Auswerte- und Steuereinrichtung mit eventueller zusätzlicher Speichereinheit zu verbinden, um den Schweißvorgang in Abhängigkeit der Messergebnisse zu steuern und/oder dessen Qualität, insbesondere die Qualität des zu verschweißenden Teils, zu werten. So ist es denkbar, dass der durch die Bewegung des Bolzens im Bolzenhalter verursachte Ist-Wert bzw. Ist-Kurvenverlauf als Ausgangssignal der Sensoreinrichtung mit einem Sollwert bzw. Sollkurvenverlauf verglichen wird und so zusätzlich Aussagen über Länge, Bewegungsgeschwindigkeit, Dicke, Profil usw. des zu verschweißenden Teils sowie Defekte am Bolzenhalter, wie beispielsweise Bruch einer Lamelle usw., getroffen werden können. Hierbei kann die Überwachung mehrerer oder gar aller Lamellen auf Beschädigung, wie Bruch, Einreißen oder auch Nachlassen der Spannung bzw. der Spannkraft (Ausweiten), durch ein Vorsehen von wenigstens einem Sensor je zu überwachender Lamelle erfolgen.

Der Sollwert bzw. Sollkurvenverlauf kann hierbei vorgebbar sein, beispielsweise über ein Terminal, ein Netzwerk (LAN, WAN) oder andere Eingabegeräte wie Karten- oder Diskettenlesegerät o.ä. und/oder aus vorangegangenen Messungen gewonnen werden. Hierbei können beispielsweise zu Beginn der Verarbeitung einer Charge von gleichen zu verschweißenden Teilen mit ausgewählten den vorgegeben Toleranzen genügenden zu verschweißenden Teilen eine oder mehrere Kalibriermessung vorgenommen werden und hieraus beispielsweise über Mittelwertbildung eine Sollkurve bestimmt werden. Solche Werte bzw. Kurven können dann vorteilhafterweise intern oder extern zur weiteren späteren Verwendung, auch an anderen Bolzenhaltern, gespeichert werden.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert. In der Zeichnung zeigen:
- Fig. 1: eine Ansicht eines Schweißkopfes mit einem Bolzenhalter ohne Bolzen nach der Erfindung im Längsschnitt;
- Fig. 2: eine Ansicht des Schweißkopfes nach Fig. 1 mit Bolzen im Längsschnitt;
- Fig. 3: eine Seitenansicht eines Bolzenhalter in Einzeldarstellung;
- Fig. 4: ein Diagramm eines Kurvenverlaufs der Ausgangssignale einer Sensoreinrichtung während einer Bewegung eines Bolzens im Bolzenhalter und
- Fig. 5: ein Diagramm einer Bewegung eines Bolzens im Bolzenhalter.

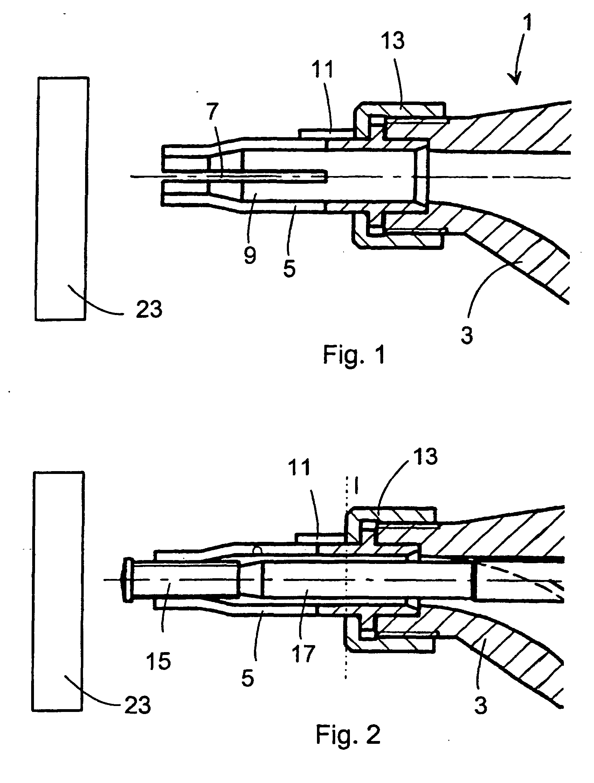

Fig. 1 zeigt den vorderen Bereich einer Bolzenschweißvorrichtung, wie beispielsweise Schweißkopf oder Schweißpistole, die den vorderen Bereich einer Schweißachse 3 umfasst, an dessen stirnseitigen Ende ein Bolzenhalter 5 angeordnet ist. Der Bolzenhalter 5 ist hierbei mittels eines lösbaren Befestigungsmittels in Form einer Überwurfmutter 13 an der Spitze der Schweißachse 3 lösbar befestigt. Wie aus Fig. 1 ersichtlich, weist der Bolzenhalter 5 mehrere, beispielsweise vier, sechs oder eine beliebige andere Anzahl von Längsschlitzen entlang der Längsachse des Bolzenhalters 5 und somit der Längsachse des Bolzenschweißkopfs 1 auf, die vom stirnseitigen Kopfende bis zu einem Drittel, zur Hälfte oder darüber hinaus des Bolzenhalters 5 reichen. Durch diese z.B. vier Längsschlitze 7 ist der Bolzenhalter 5 in mehrere, beispielsweise vier Lamellen 9 unterteilt.

Weiterhin weist der Bolzenhalter 5 einen oder mehrere Dehnungsmessstreifen 11 auf, die als Sensoreinrichtung fungieren. Die Dehnungsmessstreifen 11 sind hierbei vorteilhafterweise im Bereich der größten auftretenden Verformung aufgrund einer Bolzenbewegung mit dem Bolzenhalter 5 angeordnet. Im Ausführungsbeispiel sind die Dehnungsmessstreifen 11 an der Außenfläche des Bolzenhalters 5 im Bereich der Fußenden der Schlitze 7 angeordnet, da hier mit der größten Verformung zu rechnen ist. Hierbei kann ein Dehnungsmessstreifen 11 fest mit der Außenfläche des Bolzenhalters 5, z.B. mittels Kleben, Nieten oder Schweißen verbunden und/oder mit der Überwurfmutter 13 fest verbunden oder an diese angeformt sein, so dass eine Vergrößerung des Außenumfangs und damit Verformung der Wandung des Bolzenhalters 5 im Bereich des Dehnungsmessstreifens 11 bzw. an dessen Unterseite eine Verformung des Dehnungsmessstreifens 11 bewirkt. Bei einer Befestigung der Dehnungsmessstreifen 11 ausschließlich an der Überwurfmutter 13, beispielsweise direkt oder auf an der Überwurmutter angeformten den Lamellen 9 in Lage entsprechenden Fingern, können vorteilhafterweise verschiedene Bolzenhalter 5 mit einer solchen Überwurfmutter 13 verwendet werden, ohne dass solche Bolzenhalter 5 eigene Dehnungsmessstreifen 11 aufweisen müssen.

Fig. 2 zeigt den Zustand eines Bolzenhalters 5, welcher mit einem Bolzen 15 geladen und für einen Schweißvorgang des Bolzen 15 an einem Werkstück 17 bereit ist. Hierbei wurde der Bolzen 15 mittels eines Ladestifts 17 vom Fußpunkt des Bolzenhalters 5 bis zu dessen Spitze in seine in Fig. 2 dargestellte Endlage befördert, wobei die Lamellen 9 des Bolzenhalters 5 je nach Zeitpunkt der Bewegung des Bolzens 15 und dessen Aufenthaltsort im Bolzenhalter 5 einer Verformung radial nach außen unterliegen bis der Bolzen 15 seine Endlage erreicht und von den Lamellen des Bolzenhalters 5 radial nach innen mit einer Kraft beaufschlagt wird und eventuell zusätzlich durch einen Ladestift 17 gegen ein Zurückrutschen gehalten wird.

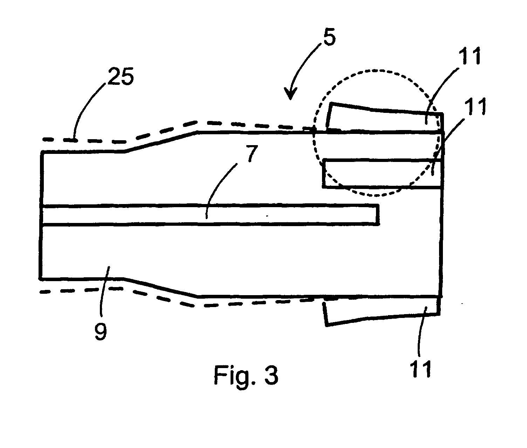

Fig. 3 zeigt eine vergrößerte Einzeldarstellung des vorderen und mittleren Bereichs eines Bolzenhalters 5 ab der Linie I in Fig. 2. Hierbei ist die mögliche Verformung der Lamellen 9 radial nach außen als gestrichelte Linie 25 dargestellt, welche bei einem rotationssymmetrischen zu verschweißenden Teil 15 alle Lamellen 9 also den gesamten Umfang des Bolzenhalters 5 in diesem Bereich betrifft.

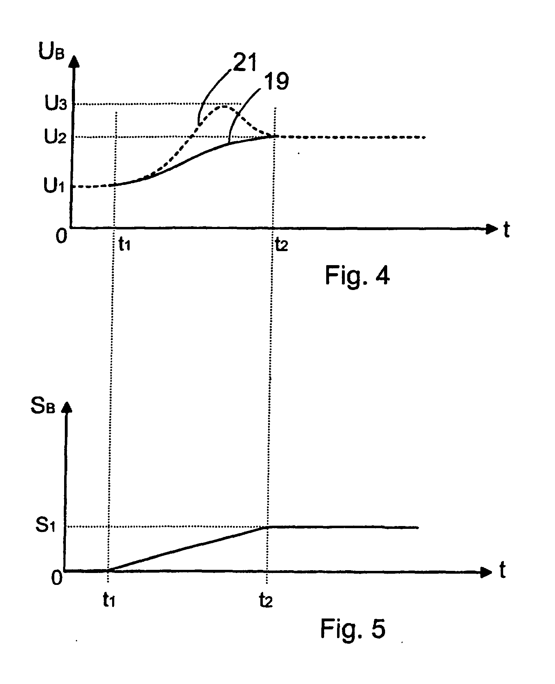

Die Verformung des Bolzenhalters 5 bzw. dessen Lamellen 9 bewirkt hierbei eine Verformung des oder der Dehnungsmessstreifen, so dass sich dessen Ausgangssignal bzw. Messsignal entsprechende ändert. Zur Umsetzung eines Messwiderstands in eine, wie in Fig. 4 im Diagramm dargestellte, Messspannung dient z.B. eine Brückenschaltung mit dem oder den Dehnungsmessstreifen als veränderliche Widerstände in den Brückenzweigen, so dass bei einer anliegenden Festspannung an einem Diagonalzweig das Messsignal am anderen Diagonalzweig als Messspannung U_{B} entnommen werden kann. Selbstverständlich steht eine solche beschriebene Schaltung nur beispielhaft für viele einem Fachmann bekannte Umsetzungs- oder Auswertungsschaltungen wie z.B. Schwellwertschaltungen, Analog-Digitalschaltungen mit Komparator o.ä.

Im Weiteren werden die in Fig. 4 dargestellten Verläufe sowie deren Auswertung anhand einer Bewegung des Bolzens 15 durch einen Bolzenhalter 5 gemäß Fig. 5 dargestellt.

Nach Fig. 5 legt der Bolzen ab dem Zeitpunkt t₁ bis zum Zeitpunkt t₂ eine Strecke S₁ zurück, wobei diese Bewegung im Diagramm nur beispielhaft als lineare gleichförmige Bewegung dargestellt ist. Als Nullpunkt der Bewegung ist hierbei der Punkt definiert, bei dessen Fortbewegung der Bolzen im Bolzenhalter eine erste Bewegung der Lamellen 9 nach außen bewirkt. Vor diesem Zeitpunkt liegt das Messsignal der Dehnungsmessstreifen als konstanter Wert, also z.B. wie in Fig. 4 dargestellt als Diagonalspannung U₁ einer Messbrücke vor.

Bei einer weiteren Bewegung des Bolzens durch den Bolzenhalter verändert sich die Messspannung U_{B} aufgrund der auf den Dehnungsmessstreifen 11 einwirkenden Verformung der Lamellen 9 in diesem Bereich und verläuft beispielsweise entlang einer als durchgezogene Linie dargestellte Kurve 19 im Diagramm nach Fig. 4 bis zu einem Zeitpunkt t₂ keine weitere Veränderung der Verformung der Lamellen 9 erfolgt und als Endspannung U₂ erreicht ist. Diese kann, wie in Diagrammen nach Fig. 4 und Fig. 5 dargestellt, mit der Endlage des Bolzens 15 im Bolzenhalter 5 übereinstimmen oder bereits vorher durch fehlende weitere Verformung aufgrund der Längsbewegung des Bolzens 15 im Bolzenhalter 5 erreicht sein.

Die durchgezogene Kurve 19 im Diagramm nach Fig. 4 zeigt hierbei ein Beispiel eines Bolzens 15 ohne Kragen, so dass die Endspannung U₂ auch das Maximum der Kurve ist. Dagegen zeigt die gestrichelt dargestellte Kurve 21 in Fig. 4 einen typischen Kurvenverlauf einer Bewegung eines Kragenbolzens 15 durch einen Bolzenhalter 5 bei dem der Endwert U₂ der Messspannung U_{B} vorher durch ein Maximum U₃ übertroffen wird. Dieses Maximum wird hierbei durch den größeren Außenumfang des Kragens gegenüber dem restlichen Umfang des Bolzens und der hierdurch weiter radial nach außen gedrückten Lamellen 9 bewirkt.

Wird ein solches Messergebnis bzw. Ist-Kurvenverlauf nicht nur einer einfachen Sollwertschaltung, Vergleicher o.ä. sondern einer Auswerte- und Steuereinheit zugeführt, so kann der Kurvenverlauf über die Zeit die Grundlage für Aussagen wie Form, Länge, Abmessung, Profil des Bolzens 15 zusätzlich zum einfachen Detektieren "Bolzenvorhanden Ja ― Nein" bilden. Beispielsweise kann in einer Auswerteeinheit ein Vergleich einer so gemessenen Ist-Kurve mit einer Sollkurve vorgenommen werden, wobei die Ist-Kurve innerhalb gewisser Toleranzen liegen kann. Die Sollkurve kann hierbei extern in eine Auswerteeinheit z.B. über ein Terminal, Lesegerät wie z.B. Diskette usw. eingegeben werden und/oder mittels Kalibriermessungen ermittelt werden.

Für eine solche Kalibriermessung ist es denkbar, dass eine oder mehrere Bolzenmessungen mit einem oder mehreren Toleranzen genügenden Bolzen vorgenommen werden und deren Ist-Kurven ermittelt werden. Hierbei können auch Bolzen, die an Unter- und Obergrenze der Toleranz liegen, verwendet werden um einen möglichst breiten Bereich zu ermitteln. Aus diesen Ergebnissen lässt sich dann eine Soll-Kurve bzw. ein Soll-Kurvenbereich beispielsweise mittels Mittelwertbildung, Varianz o.ä. ermitteln, innerhalb dieser die weiteren nachfolgenden Messergebnisse liegen müssen. Genügt eine Messkurve nicht dem Sollwert, so wird der Schweißvorgang unterbrochen, z.B. durch Nicht-Einschalten des Schweißstroms oder Stoppen bzw. Nicht-Vorwärtsbewegung der Schweißachse, so dass ein unerwünschtes Verschweißen eines den Toleranzen nicht genügenden Bolzens 15 oder gar bei einem Fehlen eines Bolzens des Bolzenhalters 5 bzw. dessen Kopf mit einem Werkstück 17 verhindert wird.

Bei Verwendung mehrerer Dehnungsmessstreifen 11 oder anderer Detektoren ist es sogar möglich, genauere Aussagen über das Profil eines zu verschweißenden Teils 15 zu treffen, da mehrere, beispielsweise vier Detektoren oder Sensoren unterschiedliche Umfangsbereiche eines zu verschweißenden Teils 15 detektieren. Auf diese Weise können sogar Unterschiede und Veränderungen im Profil, wie mehreckig, rund, oval, Vorsprünge, Ausnehmungen usw. im Querschnitt und deren Veränderung entlang eines zu verschweißenden Teils 15 festgestell sowie zur Auswertung, Speicherung und/oder Steuerung verwendet werden. Weiterhin ist es, insbesondere bei Verwendung mehrerer Detektoren, möglich, Informationen über den Bolzenhalter selbst, wie beispielsweise Zustand, Verschleiß, Beschädigungen usw., zu erhalten und zur Auswertung, Speicherung und/oder Steuerung zu verwenden. Zusätzlich können bei Verwendung mehrerer Detektoren auch Aussagen über den Zustand des Bolzenhalters selbst, wie Beschädigung durch Ausbrechen, Einreißen einer oder mehrerer Lamellen, Nachlassen der Spannkraft der Lamellen (Ausweiten), usw. getroffen werden, so dass hierdurch bedingte Fehllagen eines zu verschweißenden Teils vermieden werden können.

## Patentansprüche

1. Bolzenhalter für eine Bolzenschweißvorrichtung,
**dadurch gekennzeichnet,**
**dass** der Bolzenhalter (5) eine Sensoreinrichtung (11) aufweist, um das Vorhandensein eines zu verschweißenden Teils (15) im Bolzenhalter in der Schweißposition zu detektieren.

2. Bolzenhalter nach Anspruch 1, **dadurch gekennzeichnet, dass** die Sensoreinrichtung (11) innen, außen oder im Bolzenhalter (5) fest integriert ist.

3. Bolzenhalter nach Anspruch 1, **dadurch gekennzeichnet, dass** die Sensoreinrichtung (11) lösbar und fixierbar innen am , außen am oder im Bolzenhalter (5) angeordnet ist.

4. Bolzenhalter nach einem der vorhergehenden Ansprüche, **dadurch gekennzeichnet, dass** die Sensoreinrichtung (11) als wenigstens ein Dehnungsmessstreifen (11) ausgebildet ist.

5. Bolzenhalter nach einem der vorhergehenden Ansprüche, **dadurch gekennzeichnet, dass** die Sensoreinrichtung (11) mit einer Auswerte- und Steuereinrichtung verbunden ist, um den Schweißvorgang in Abhängigkeit der Messergebnisse zu steuern.

6. Bolzenhalter nach Anspruch 5, **dadurch gekennzeichnet, dass** die Sensoreinrichtung (11) mit einer Speichereinrichtung verbunden ist, um Messergebnisse zu speichern und/oder gespeicherte Messergebnisse abzurufen.

7. Bolzenschweißvorrichtung mit einem Bolzenhalter (5) nach einem der vorhergehenden Ansprüche.

8. Bolzenschweißverfahren mit einer Bolzenschweißvorrichtung nach Anspruch 7, **daduch gekennzeichnet, dass** der Verfahrensablauf abhängig vom Messergebnis der Sensoreinrichtung (11) gesteuert wird.

9. Verfahren nach Anspruch 8, **dadurch gekennzeichnet, dass** der Verlauf einer Messkurve (Istkurve) eines zu verschweißenden Bolzens mit einer vorgebbaren Messsollkurve verglichen wird, um Aussagen über den Schweißvorgang, insbesondere über das zu verschweißende Teil (15) zutreffen.

10. Verfahren nach Anspruch 9, **dadurch gekennzeichnet, dass** die Messsollkurve mittels einer oder mehrerer Kalibriermessungen gewonnen wird.

## Claims

1. Stud holder for a stud welding apparatus, **characterised in that** the stud holder (5) has a sensor device (11) in order to detect the presence of a part (15) to be welded when said part is in the stud holder in the welding position.

2. Stud holder according to Claim 1, **characterised in that** the sensor device (11) is fixedly integrated inside, outside or in the stud holder (5).

3. Stud holder according to Claim 1, **characterised in that** the sensor device (11) is arranged detachably and fixably on the inside of, on the outside of or in the stud holder (5).

4. Stud holder according to one of the preceding claims, **characterised in that** the sensor device (11) takes the form of at least one strain gauge (11).

5. Stud holder according to one of the preceding claims, **characterised in that** the sensor device (11) is connected to an evaluating and control device in order to control the welding operation in dependence on the measurement results.

6. Stud holder according to Claim 5, **characterised in that** the sensor device (11) is connected to a storage device in order to store measurement results and/or retrieve stored measurement results.

7. Stud welding apparatus having a stud holder (5) according to one of the preceding claims.

8. Stud welding method using a stud welding apparatus according to Claim 7, **characterised in that** the way in which the method proceeds is controlled in dependence on the measurement result of the sensor device (11).

9. Method according to Claim 8, **characterised in that** the course of a measurement curve (actual curve) of a stud to be welded is compared with a predeterminable desired measurement curve in order to make statements about the welding operation, in particular about the part (15) to be welded.

10. Method according to Claim 9, **characterised in that** the desired measurement curve is obtained by means of one or more calibrating measurements.

## Revendications

1. Dispositif de retenue de goujon pour un dispositif de soudage de goujons, **caractérisé en ce**
**que** le dispositif (5) de retenue de goujon comporte un dispositif de détection (11) servant à détecter la présence d'une pièce à souder (15) dans le dispositif de retenue de goujon dans la position de soudage.

2. Dispositif de retenue de goujon selon la revendication 1, **caractérisé en ce que** le dispositif de détection (11) est intégré de façon fixe intérieurement, extérieurement ou dans le dispositif de retenue de goujon (5).

3. Dispositif de retenue de goujon selon la revendication 1, **caractérisé en ce que** le dispositif de détection (11) est disposé de façon amovible et de manière à pouvoir être fixé intérieurement sur, extérieurement sur ou dans le dispositif (5) de retenue de goujon.

4. Dispositif de retenue de goujon selon l'une des revendications précédentes, **caractérisé en ce que** le dispositif de détection (11) est agencé sous la forme d'au moins une jauge extensométrique (11).

5. Dispositif de retenue de goujon selon l'une des revendications précédentes, **caractérisé en ce que** le dispositif de détection (11) est relié à un dispositif d'évaluation et de commande afin de commander le procédé de soudage en fonction des résultats de mesure.

6. Dispositif de retenue de goujon selon la revendication 5, **caractérisé en ce que** le dispositif de détection (11) est relié à un dispositif de mémoire pour mémoriser des résultats de mesure et/ou appeler des résultats de mesure mémorisés.

7. Dispositif de soudage de goujons comportant un dispositif de retenue de goujon (5) selon l'une des revendications précédentes.

8. Procédé de soudage de goujons comportant un dispositif de soudage de goujons selon la revendication 7, **caractérisé en ce que** le déroulement du procédé est commandé en fonction du résultat de mesure du dispositif de détection (11).

9. Procédé selon la revendication 8, **caractérisé en ce que** l'allure d'une courbe de mesure (courbe réelle) d'un goujon à souder est comparée à une courbe de consigne de mesure pouvant être prédéterminée, de manière à obtenir des indications concernant le processus de soudage, notamment sur la pièce à souder (15).

10. Procédé selon la revendication 9, **caractérisé en ce que** la courbe de consigne de mesure est obtenue à l'aide d'une ou de plusieurs mesures de calibrage.
